# EUROPÄISCHE PATENTSCHRIFT

(11) **EP 1 131 547 B1**
(45) Veröffentlichungstag und Bekanntmachung des Hinweises auf die Patenterteilung: **10.03.2004**
(21) Anmeldenummer: 99959282.7
(22) Anmeldetag: 17.11.1999
(51) Int. Cl.: F02B 27/02

(54) **SAUGROHR MIT SCHALTELEMENT**
SUCTION TUBE WITH SWITCHING ELEMENT
COLLECTEUR D'ADMISSION COMPORTANT UN ELEMENT DE MANOEUVRE

(30) Priorität: 21.11.1998 DE 19853741
(43) Veröffentlichungstag der Anmeldung: 12.09.2001
(73) Patentinhaber: Mann + Hummel GmbH, 71638 Ludwigsburg (DE)
(72) Erfinder: FISCHER, Christian, D-70736 Fellbach (DE); GALM, Martin, D-74722 Buchen-Einbach (DE); VACULIK, Robert, D-71672 Marbach (DE)
(74) Vertreter: Voth, Gerhard
(86) Internationale Anmeldenummer: PCT/EP1999/008846
(87) Internationale Veröffentlichungsnummer: WO 2000/031391

(56) Entgegenhaltungen:
- EP-A- 0 691 461
- WO-A-98/35146
- DE-A- 3 807 193
- DE-A- 19 712 680
- DE-C- 957 802

## Beschreibung

### Stand der Technik

Die Erfindung betrifft ein Saugrohr mit einem Schaltelement, insbesondere zur Beeinflussung der Länge verschiedener Rohrabschnitte des Saugrohrs nach der Gattung des Patentanspruches 1.

Schaltsaugrohre sind allgemein bekannt. Durch die zur Verwendung kommenden Schaltelemente werden vorrangig die Längen der Saugkanäle, die den Luftsammler mit den Zylindereinlässen verbinden, beeinflußt. Zu diesem Zweck müssen die Schaltelemente beweglich sein. In den meisten Fällen sind diese daher zylindrisch ausgeführt, wobei durch eine Verdrehung der Schaltelemente die gewünschte Längenänderung im Saugrohr vorgenommen werden kann.

Zur Längenschaltung kommunizieren die Schaltelemente mit den Wandungen des Saugrohres. Um die akustischen bzw. strömungstechnischen Effekte der Längenveränderung im Saugrohr nutzen zu können, müssen die zwischen Saugrohrwandung und Schaltelement entstehenden Spalte möglichst dicht sein, auch wenn eine absolute Dichtheit nicht notwendig ist, da es hierbei um Dichtungen zwischen reinluftführenden Kanälen geht. Dies läßt sich durch eine hohe Maßgenauigkeit der Schaltelemente und der Saugrohrwandungen erzielen und durch Vorsehen von Dichtungsringen unterstützen. Das Dokument DE 38 07 193 A1 zeigt ein Saugrohr mit einem Einlaß, zylinderseitigem Austritt und einem Schaltelement, welches eine Schaltwalze bildet und beweglich im Saugrohr angeordnet ist. Die Schaltwalze dient insbesondere zur Beeinflussung der Länge verschiedener Rohrabschnitte des Saugrohres. Zur Dichtung sind zwischen dem Saugrohr und der Schaltwalze Dichtringe, welche in Nuten der Schaltwalze angeordnet sind, vorgesehen.

Ein weiteres Beispiel hierfür ist in der DE 44 23 427 A1 angegeben. Es werden Dichtungsringe vorgeschlagen, die in Nuten in dem zylindrischen Schaltelement eingebracht werden können und einen größeren Durchmesser aufweisen als die Einbauöffnung für das Schaltelement. Durch den Einbau des Schaltelements ergibt sich dadurch eine elastische Deformation der Dichtungsringe, die zu einer Abdichtung gegen die Saugrohrwandung führt. Die obenstehenden Dichtungsmöglichkeiten für Schaltelemente im Saugrohr sind jedoch mit hohem fertigungs- bzw. montagetechnischem Aufwand verbunden. Eine genügende Maßgenauigkeit von Schaltelement und Saugrohr für eine befriedigende Abdichtung ist insbesondere bei Schaltsaugrohren aus Kunststoff aufgrund der Schwindung des Werkstoffes nach dem Gießen nur mit einer aufwendigen Nachbearbeitung erreichbar. Die in der Schaltwalze untergebrachten Dichtringe können solche Toleranzen zwar ausgleichen, jedoch erschweren sie die Montage des Schalelementes in der zugehörigen Einbauöffnung. Denn die Einbauöffnung weist in vielen Fällen zur Bildung von gekrümmten Ansaugquerschnitten Durchmessersprünge auf, wobei das Schaltelement nach dem Einbau einen Wandabschnitt dieser gekrümmten Ansaugquerschnitte bildet. Zur Montage muß die mit Dichtringen ausgestattete Walze jedoch durch die Hohlräume geschoben werden, wobei sich die Dichtringe immer wieder auf ihren ursprünglichen Durchmesser entspannen. Diese müssen dann an außerordentlich schwer zugänglichen Stellen, wo sich die Dichtspalte zwischen Einbauöffnung und Schaltelement befinden, auf den Einbaudurchmesser gebracht werden. Bei Unrundheiten der Einbauöffnung ist im übrigen auch bei Zuhilfenahme von sich im Schaltelement abstützenden Dichtringen eine vollständige Dichtheit nicht zu erreichen, da sich diese nicht vollständig an die unrunde Innenkontur der Einbauöffnungen anpassen können, ohne daß die Verstellkräfte der Schaltwalze zu hohe Werte annehmen!

Die Aufgabe besteht daher darin, ein Saugrohr mit Dichtmitteln zwischen Schaltelement und zugehöriger Einbauöffnung zu schaffen, welches sich ohne Probleme montieren läßt und dabei zu einer optimalen Abdichtung der Rohrabschnitte des Saugrohres untereinander führt wobei, diese Abdichtung weitgehend unabhängig von den am Saugrohr sowie Schaltelement auftretenden Toleranzen ist.

Diese Aufgabe wird durch die Merkmale des Patentanspruches 1 gelöst.

### Vorteile der Erfindung

Das erfindungsgemäße Saugrohr besitzt mindestens ein Schaltelement, welches beweglich im Saugrohr angeordnet ist. Zwischen den Wandungen des Saugrohres und dem Schaltelement entstehen Spalte. Diese Spalte sind durch Dichtmittel abgedichtet, die sich im Saugrohr abstützen, so daß sich eine Relativbewegung zwischen Dichtmittel und Schaltelement bei Bewegung des letzteren ergibt. Die Dichtmittel sind zumindest teilweise elastisch ausgeführt und so gestaltet, daß ihr Einbau zu einer elastischen Deformation der elastischen Teile oder des gesamten Dichtmittels führt. Diese kann genutzt werden, einen Anpressdruck zu erzeugen, der entweder zur Fixierung des Dichtmittels im Saugrohr genutzt wird oder zur Erzielung einer Dichtwirkung zwischen Schaltelement und Dichtmittel. Die Fixierung der Dichtmittel im Saugrohr kann alternativ durch eine formschlüssige Verbindung, insbesondere eine Nut erfolgen. Wichtig ist hierbei, daß der Formschluß die Dichtwirkung der Dichtmittel nicht verhindert, also z. B. die Anpressung der Dichtmittel auf das Schaltelement erlaubt. Werden die Dichtmittel auf das Schaltelement gedrückt, also eine Berührung zwischen diesen Bauteilen erzeugt, so muß der Anpressdruck so niedrig gewählt werden, daß eine Relativbewegung zwischen Dichtmittel und Schaltelement noch möglich ist. Alternativ kann eine berührungslose Dichtung, insbesondere eine Labyrinthdichtung, vorgesehen werden. Die Fixierung der Dichtmittel im Saugrohr kann alternativ zu den oben genannten form- und kraftschlüssigen Verbindungsmöglichkeiten auch stoffschlüssig, insbesondere durch eine Klebverbindung, erfolgen.

Die oben beschriebenen Dichtmittel sind für grobtolerierte Kunststoffsaugrohre und deren Schaltelemente aus Kunststoff geeignet. Insbesondere können sich vollständig elastisch ausgeführte Dichtringe an die Wandung einer zylindrischen Einbauöffnung zur Aufnahme des Schaltelementes anpassen, wenn diese unrund sind. Dies wird dadurch möglich, daß die Dichtmittel in der zylindrischen Einbauöffnung fixiert werden und sich deshalb bei Verstellung des Schaltelementes nicht mitdrehen müssen. Das erfindungsgemäße Saugrohr kann natürlich auch aus anderen Werkstoffen als Kunststoff, z. B. Aluminium oder Magnesium oder einer Kombination aus diesen Werkstoffen bestehen.

Besonders vorteilhaft ist aus den genannten Gründen eine Gestaltung des Schaltelementes als zylindrischer Körper, insbesondere als Schaltwalze. Durch Unrundheiten der Schaltwalze bzw. der zylindrischen Einbauöffnung entstehen am Umfang unterschiedliche Spaltmaße, die durch die Dichtmittel ausgeglichen werden können. Dies ist insbesondere durch Vorsehen von Nuten in der Schaltwalze erreichbar, wobei die Dichtmittel im Zusammenwirken mit diesen Nuten eine Labyrinthdichtung ergeben. Die für die Schaltwalzen gemachte Aussagen treffen ebenso auf Drehschieber zu.

Die Dichtmittel können gemäß einer weiteren Ausgestaltung der Erfindung aber auch als Dichtleisten ausgeführt sein. Die Dichtleisten lassen eine Abdichtung des durch Saugrohrwandung und Schaltelement gebildeten Spaltes entlang einer Graden zu. Entsprechend der Elastizität der Dichtleiste ist auch eine leicht gewundene oder gebogene Form des Dichtspaltes realisierbar. Eine Abdichtung durch Dichtleisten kann z. B. bei Schiebern erfolgen. Weiterhin sind auf diese Weise evtl. Dichtspalte an den Stirnseiten von zylindrischen Schaltelementen abdichtbar. Alternativ kann die Dichtleiste in einer zylindrischen Einbauöffnung parallel verlaufend zu der Drehachse eines zylindrischen Schaltelementes angebracht sein.

Bei zylindrischen Einbauöffnungen ist gemäß einer zweckmäßigen Ausbildung des Erfindungsgedankens der Dichtring kreisringförmig auszuführen. Er kann vorteilhafterweise am Außenumfang eine elastische Lage aufweisen, die nach dem Einbau an den Wandungen des Saugrohrs anliegt und so für eine Fixierung sorgt. Die elastische Lage besteht bevorzugt aus Silikon oder Moosgummi. Um den Anpreßdruck zur Fixierung des Dichtrings an der Saugrohrwand zu erhöhen, kann der Ring mit einem größeren Durchmesser versehen werden, als in der Einbauöffnung zur Verfügung steht. Er muß dann geschlitzt sein, um ihn zum Einbau elastisch deformieren zu können. Der Schlitz kann derart ausgeführt sein, daß sich die Enden des Dichtringes überlappen um auch im geschlitzten Bereich eine optimale Dichtwirkung zu erzielen. Der Schlitz kann auch aus einer Aussparung bestehen, die breit genug ist, um eine Dichtleiste in der zylindrischen Einbauöffnung vorzusehen, die die Dichtringe kreuzt.

Ist das Saugrohrgehäuse längs geteilt, kann auf den Schlitz in den Dichtringen verzichtet werden. Die Dichtringe können dann vor dem Zusammensetzen der Gehäuseschalen in die Einbauöffnung eingesetzt werden. Die Dichtringe können z.B. aus einem starren Ring bestehen, in den am Außenumfang eine Nut zur Aufnahme eines Dichtringes eingebracht ist. Der Dichtring ist die elastische Lage.

Eine günstige Ausführungsform des Dichtringes sieht vor, diesen am Innenumfang mit einer Schlauchfeder zu versehen. Diese wird beim Einbau des Dichtrings zusammengedrückt und übt dadurch eine nach außen gerichtete Radialkraft auf den Dichtring aus, die für einen zusätzlichen Anpreßdruck des Dichtrings an die Saugrohrwandung sorgt. Der Dichtring kann dann sehr weich ausgeführt werden und sich dadurch Unrundheiten in der zylindrischen Einbauöffnung besonders gut anpassen. Diese Bauform des Dichtrings wird am Besten mit der oben beschriebenen, mit Nuten im Schaltelement zusammenwirkenden Labyrinthdichtung kombiniert. Die Biegeweichheit des Dichtringes kann außer durch eine entsprechende Werkstoffwahl auch durch eine Veränderung des Ringquerschnittes beeinflußt werden.

Werden die Dichtmittel dagegen formschlüssig in Nuten der Saugrohrwandungen gelagert, und sollen sie sich zur Erzeugung der Dichtheit auf dem Schaltelement abstützen, ist es vorteilhaft, den Anpreßdruck durch ein elastisches Element zu erzeugen, welches sich in den Nuten in der Saugrohrwandung befindet und im Sinne des Anspruches 1 als Teil der Dichtmittel aufgefaßt wird. Dies kann z. B. durch eine wellenförmige Biegefeder erfolgen. Eine solche Anordnung ist insbesondere für Dichtleisten geeignet, jedoch genauso bei Dichtringen realisierbar.

Eine weitere Variante der Erfindung sieht vor, den Dichtring aus zwei Scheiben aufzubauen. Diese sind an ihren Außenrändern mit einer elastischen Verbindung versehen. Die Scheiben können aus Stahl sein, wobei als elastische Verbindung insbesondere ein Schlauch zum Einsatz kommt, der mit den Außenrändern der Scheiben verklebt ist. Alternativ hierzu können die Scheiben auch aus Kunststoff bestehen, wobei die elastische Verbindung, bestehend z. B. aus Gummi, in Mehrkomponententechnik an die Außenränder der Scheiben angespritzt ist. Der Einbau der Dichtringe erfolgt durch Einschieben in die zylindrische Einbauöffnung. Diese können im unverformten Zustand bezogen auf den Innendurchmesser der Einbauöffnung mit Untermaß oder leichtem Übermaß gefertigt sein, so daß die Montagekräfte klein sind. Sobald sich der Dichtring an dem vorgesehenem Einbauort befindet wird der Abstand zwischen Scheiben verringert, wodurch sich die elastische Verbindung nach radial außen ausdehnt, bis sie die Wandung der Einbauöffnung erreicht. Eine weitere Annäherung der Scheiben erhöht dann den Anpressdruck des Dichtringes in der Einbauöffnung. Das Verringern des Scheibenabstandes kann z. B. durch ein entsprechendes Montagewerkzeug erfolgen. Alternativ hierzu ist es denkbar, das Schaltelement aus verschiedenen Schaltscheiben aufzubauen, die im Wechsel mit den Dichtringen in die Einbauöffnung gebracht werden. Ein Anpressen der Dichtung an die Rohrwandung kann dann durch Zusammenschieben der Schaltscheiben erfolgen. Hierzu müssen diese einen Anschlag besitzen, der den Scheibenabstand definiert. Dies kann z. B. durch eine Scheibennarbe erfolgen, wobei die Schaltscheiben durch Aufschieben auf eine Welle montiert werden. Am Außenumfang der Schaltscheiben müssen nutartige Schlitze frei bleiben, die mit den Dichtringen zusammenwirken. Durch das Zusammenschieben entsteht zwischen Scheiben der Dichtringe und den angrenzenden Nutflanken der Schaltscheiben eine Dichtwirkung.

Eine besondere Ausführungsform der scheibenförmig aufgebauten Dichtringe sieht vor, daß zwischen den Scheiben eine Schnappverbindung einrastet, die den Dichtring im eingebauten Zustand fixiert. Dies hat den Vorteil, daß die auftretende Reibung zwischen den oben beschriebenen Nutflanken und dem Dichtring minimiert werden kann. Genauso ist eine berührungsfreie Labyrinthdichtung zwischen diesen Bauteilen möglich.

Die Reibung zwischen Dichtmittel und Schaltelement, sofern zwischen diesen Bauteilen eine Berührung vorgesehen ist, kann in vorteilhafter Weise vermindert werden, wenn am Dichtmittel Wulste vorgesehen sind, die mit den Schaltelementen in Berührung stehen. Es ist ebenso möglich die Wulste derart am Schaltelement anzubringen, daß sie mit den Dichtmitteln im Eingriff stehen. Weiterhin können derartige Wulste die Wirkung von Labyrinthdichtungen als Strömungshindernis erhöhen.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in den Zeichnungen anhand von schematischen Ausführungsbeispielen beschrieben. Hierbei zeigen
- Figur 1: einen Schnitt durch ein Saugrohr mit einer Schaltwalze, die einteilig im Saugrohr montiert wird und eine Dichtleiste sowie vier Dichtringe aufweist, entlang der Drehachse der Schaltwalze,
- Figur 2: den Schnitt B-B gemäß Figur 1,
- Figur 3: das Detail X aus Figur 2, wobei eine Dichtleiste mit Wellfeder als elastischem Element geschnitten dargestellt ist,
- Figur 4: das Detail Y aus Figur 1, wobei ein Dichtring mit elastischer Lage und Schlauchfeder im Schnitt dargestellt ist,
- Figur 5: den Ausschnitt eines Saugrohres mit scheibenförmig aufgebauter Schaltwalze und Dichtring, wobei eine Darstellung entsprechend dem Detail Z aus Figur 1 gewählt ist und
- Figur 6: einen scheibenförmig aufgebauten Dichtring mit elastischer Verbindung der Scheiben und Schnappverbindung.

### Beschreibung der Ausführungsbeispiele

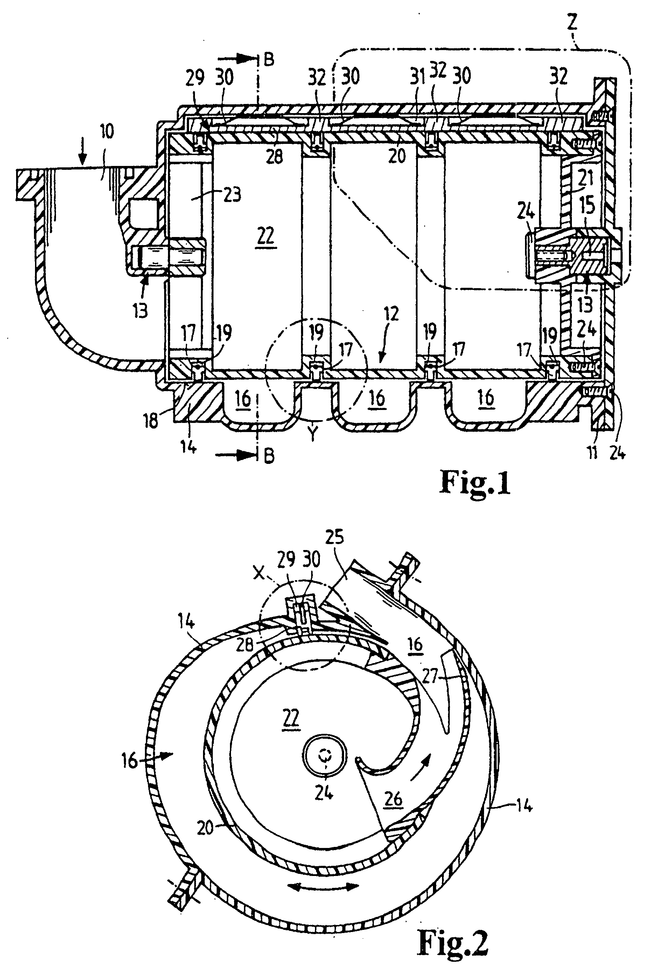

Das in Figur 1 dargestellte Schaltsaugrohr ist im wesentlichen zylindrisch aufgebaut, wobei auf der einen Stirnseite ein Einlaß 10 für die gefilterte Ansaugluft und auf der andem Stirnseite ein Deckel 11, der eine Einbauöffnung für eine Schaltwalze 12 freigibt, vorgesehen sind. Bei abgenommenem Deckel kann die Schaltwalze 12 in das Innere des Saugrohres geschoben werden. Diese weist im eingebauten Zustand zwei Lagerstellen 13 auf, mit denen sie sich in einem Saugrohrgehäuse 14 bzw. im Deckel 11 abstützt. Die deckelseitige Lagerstelle weist gleichzeitig eine Aufnahme 15 für einen nicht dargestellten Antrieb der Schaltwalze 12 auf.

Das Saugrohr ist für den Betrieb einer Dreizylinderbrennkraftmaschine gedacht. Ansaugkanäle 16 zu den Zylindern werden gebildet durch Teile der Innenwand des Saugrohrgehäuses 14 und die Außenwand der Schaltwalze 12. Die Saugkanäle verlaufen damit ringförmig um die Schaltwalze 12. Eine Abdichtung der Saugkanäle 16 untereinander und zum restlichen Saugrohrvolumen hin erfolgt durch Dichtringe 17, die sich in Zylinderabschnitten 18 der Saugrohrinnenwand abstützen und in ringförmige Nuten 19 in der Schaltwalze 12 eintauchen.

Die Schaltwalze 12 besteht aus einer Trommel 20, die mit einer Abschlußscheibe 21 versehen ist und auf diese Weise ein Sammlervolumen bildet. Der Trommelboden ist nicht geschlossen sondern besteht aus speichenförmigen Rippen 23. Diese gewährleisten, daß unabhängig von der Winkelstellung der Schaltwalze 12 die Ansaugluft vom Einlaß 10 in das Sammlervolumen 22 gelangen kann. Angedeutete Schraubverbindungen 24 dienen zur Befestigung der Abschlußscheibe 21 auf der Trommel 20, dem Deckel 11 auf dem Saugrohrgehäuse 14 und einer der Lagerungen 13 in der Abschlußscheibe 21.

Der Weg der Ansaugluft vom Sammlervolumen 22 zu den zylinderseitigen Austritten kann Figur 2 entnommen werden. In das Sammlervolumen 22 ragen Auslaßstutzen 26, die je einen Durchgang durch die Trommel 20 bilden und in die Ansaugkanäle 16 münden. Diese Auslaßstutzen enden in Zungen 27, die sich in den die Ansaugkanäle 16 bildenden Wandabschnitten des Saugrohrgehäuses 14 abstützen. Durch Drehung der Schaltwalze 12 wird dadurch die Länge der Saugkanäle 16 stufenlos variiert. Diese verjüngen sich zu ihrem Ende hin und werden dort gegenüber den Austritten 25 durch eine Dichtleiste 28 abgedichtet, um eine Kurzschlußströmung zu verhindern. Die Dichtleiste befindet sich in einer Längsnut 29 im Saugrohrgehäuse 14, die parallel zur Drehachse der Schaltwalze 12 verläuft, und wird durch mehrere Wellfedern 30 (siehe Figur 1) gegen sie Schaltwalze 12 gedrückt. Die Wellfedern 30 befinden sich in Federnuten 31, die jeweils durch Trennklötze 32 voneinander getrennt sind (siehe Figur 1).

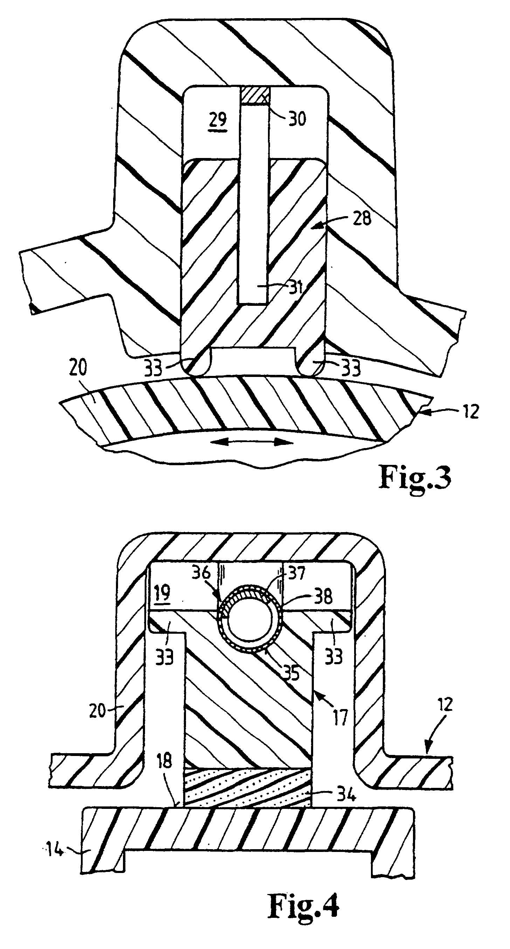

Der Figur 3 ist die Funktionsweise der Dichtleiste 28 zu entnehmen. Diese Figur dient der Erläuterung und ist nicht direkter Gegenstand der Erfindung. Die Dichtleiste 28 wird durch die Längsnut 29 geführt und durch die in der Fedemut 31 untergebrachten Wellfedern 30, die sich im Nutgrund der Längsnut 29 abstützen, gegen die Schaltwalze 12 gedrückt. Diese kann sich unter der Dichtleiste in der angedeuteten Pfeilrichtung hin und her drehen. Um die Reibung zwischen Dichtreiste 28 und Schaltwalze 12 zu minimieren, besitzt die Dichtleiste zwei Dichtwulste 33, so daß die Auflagefläche auf der Schaltwalze zwei Strecken entspricht.

Der Figur 4 ist die Wirkungsweise des Dichtringes 17 zu entnehmen. Dieser weist eine elastische Lage 34, die zu einer dichtenden Abstützung des Dichtrings in einem Zylinderabschnitt 18 des Saugrohrgehäuses 14 führt. Um den Anpressdruck des Dichtringes 17 zu verstärken, ist in einer Innenringnut 35 eine Schlauchfeder 36 untergebracht. Diese besteht aus einer Schraubenfeder 37, die mit Hilfe eines Schlauches 38 zu einem Ring zusammengesteckt ist und in zusammengedrücktem Zustand in die Innenringnut 35 eingebracht ist. Dadurch verstärkt sie den radial nach außen gerichteten Anpreßdruck des Dichtringes 17. Am Dichtring sind weiterhin an dessen Seitenkanten zwei Dichtwulste 33 angebracht. Diese Dichtwulste wirken zusammen mit der Nut 19 in der Schaltwalze 12 und bilden dadurch eine Labyrinthdichtung. Im Falle eines ungewollten Berührens der Dichtwulste 33 mit den Nutflanken, z. B. durch Toleranzen, ist die Reibung aufgrund der geringen Wulstfläche gering.

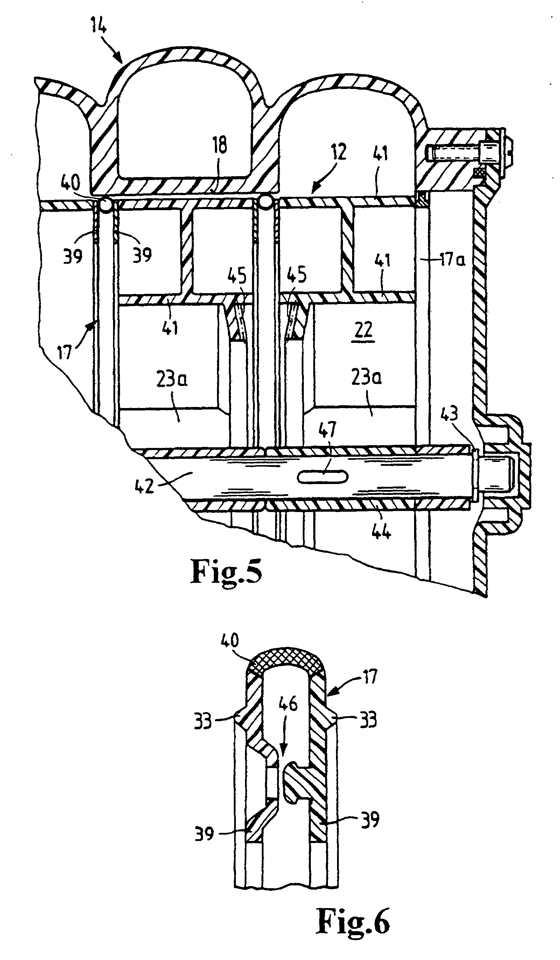

Ein alternativer Aufbau der Dichtringe 17 ist Figur 5 zu entnehmen. Diese bestehen aus zwei Scheiben 39, die durch eine elastische Verbindung 40 am Außenumfang miteinander verbunden sind. Die Schaltwalze 12 ist bei dieser Bauform aus mehreren Schaltscheiben 41 aufgebaut. Dichtringe 17 und Schaltscheiben 41 werden bei der Montage im Saugrohrgehäuse 14 im Wechsel auf eine Antriebswelle 42 aufgeschoben. Dabei wird der Abstand der Schaltscheiben 41 im Bereich der Dichtringe 17 durch ihre axiale Nabenlänge festgelegt. Die Schaltscheiben werden auf der Antriebswelle 42 durch einen Sicherungsring 43 gegen axiales Verrutschen gesichert. Der Antrieb der Antriebswelle 42 erfolgt an dem nicht dargestellten Ende.

Das Äußere der Schaltscheiben ist durch Rippen 23a mit den Naben 44 verbunden. Das Innere der Schaltscheiben 41 wird als Sammlervolumen 22 genutzt. Jede zweite Schaltscheibe ist durch eine Paßfederverbindung 47 radial auf der Antriebswelle 43 fixiert. Die Schaltscheiben weisen eine Kegelradverzahnung 45 auf, so daß jeweils über ein nicht dargestelltes, gehäusefestes Kegelzahnrad eine radial festgelegte Schaltscheibe mit der benachbarten radial nicht festgelegten Schaltscheibe derart kommuniziert, daß sie sich gegensinnig drehen. Das Saugrohrgehäuse 14 ist im übrigen wie in Figur 1 beschrieben aufgebaut.

Durch die Montage von Schaltscheiben 41 und Dichtringen 17 werden letztere durch die Schaltscheiben derart zusammengedrückt, daß die zwischen den Scheiben 39 befindlichen, schlauchförmigen elastischen Verbindungen 40 gegen die Zylinderabschnitte 18 des Saugrohrgehäuses 14 gedrückt werden. Dadurch werden diese im Saugrohrgehäuse fixiert, so daß bei Verstellung des Schaltsaugrohres eine Relativbewegung zwischen den gegenläufig drehenden Schaltscheiben 41 und den Dichtringen 17 stattfindet. Der Dichtring 17a an der letzten Schaltscheibe, der nicht zwischen zwei Schaltscheiben eingebracht ist, kann gemäß Figur 4 gestaltet werden.

Figur 6 zeigt eine alternative Ausgestaltung eines Dichtringes 17 gemäß Figur 5. Dieser besteht aus im Urformverfahren hergestellten Scheiben aus Kunststoff, die durch eine zweite elastische Komponente verbunden sind, die als elastische Verbindung 40 fungiert. Bei Annäherung der Scheiben 39 wird die elastische Verbindung 40 nach außen gewölbt wodurch eine. Fixierung im Saugrohrgehäuse zustande kommt. Im eingebauten Zustand werden die Scheiben 39 durch eine Schnappverbindung 46 zusammengehalten. Weiterhin weisen die Kunststoffscheiben je einen ringförmigen Dichtwulst 33 auf, der im eingebauten Zustand mit den nicht dargestellten Schaltscheiben 41 im Eingriff steht.

## Patentansprüche

1. Saugrohr mit mindestens einem Einlaß (10), zylinderseitigem Austritt (25) und Schaltelement (12, 41) welches eine Schaltwalze bildet, letztere insbesondere zur Beeinflussung der Länge verschiedener Rohrabschnitte des Saugrohrs, wobei
- durch die Schaltwalze kreisringförmige Spalte zu den Wandungen des Saugrohrs gebildet sind,
- das die Schaltwalze im Saugrohr beweglich ist,
- in den Spalten zwischen den Wandungen und der Schaltwalze mindestens ein Dichtring (17) angeordnet ist, der sich teilweise in an die Spalte angrenzenden Nuten (19,) befindet, **dadurch gekennzeichnet, daß** der Dichtring (17) zur Erzeugung eines Anpressdruckes elastisch deformierbare Teile aufweist und sich unbeweglich im Saugrohr abstützt, wobei die elastisch deformierbaren Teile aus einer elastischen Lage (34) bestehen, die an den Wandungen des Saurohres anliegt und der Anpreßdruck entweder zur Fixierung des Dichtmittels im Saugrohr genutzt wird oder zur Erzielung einer Dichtwirkung zwischen Schaltelement und Dichtmittel.

2. Saugrohr nach Anspruch 1, **dadurch gekennzeichnet, daß** der mindestens eine Dichtring (17) einen Ausbruch aufweist und im unverformten Zustand einen größeren Durchmesser aufweist, als im verformten, im Saugrohr eingebauten Zustand.

3. Saugrohr nach Anspruch 2, **dadurch gekennzeichnet, daß** in der Innenfläche des mindestens einen Dichtringes (17) eine Schlauchfeder angebracht ist.

4. Saugrohr mit mindestens einem Einlaß (10), zylinderseitigem Austritt (25) und Schaltelement (12, 41) welches eine Schaltwalze bildet, letztere insbesondere zur Beeinflussung der Länge verschiedener Rohrabschnitte des Saugrohrs, wobei
- durch die Schaltwalze kreisringförmige Spalte zu den Wandungen des Saugrohrs gebildet sind,
- das die Schaltwalze im Saugrohr beweglich ist,
- in den Spalten zwischen den Wandungen und der Schaltwalze mindestens ein Dichtring (17) angeordnet ist, der sich teilweise in an die Spalte angrenzenden Nuten (19,) befindet, **dadurch gekennzeichnet, daß** der Dichtring (17) zur Erzeugung eines Anpressdruckes elastisch deformierbare Teile aufweist und sich unbeweglich im Saugrohr abstützt, wobei der Dichtring aus zwei Scheiben (39) besteht, zwischen deren Außenrändern als elastisch deformierbare Teile eine elastische Verbindung (40) angebracht ist, wobei die Scheiben (39) im eingebauten Zustand einen geringeren axialen Abstand voneinander haben, als im uneingebauten Zustand, so daß die elastische Verbindung im eingebauten Zustand nach radial außen verformt ist und an die Wandungen des Saugrohres angepresst wird.

5. Saugrohr nach Anspruch 4, **dadurch gekennzeichnet, daß** die elastische Verbindung (40) aus einem Schlauch besteht.

6. Saugrohr nach einem der Ansprüche 4 oder 5, **dadurch gekennzeichnet, daß** die Scheiben (39) eine Schnappverbindung aufweisen, die im eingebauten Zustand des Dichtringes (17) eingeschnappt sind.

7. Saugrohr nach einem der vorherigen Ansprüche, **dadurch gekennzeichnet, daß** die Dichtmittel (17, 28) das Schaltelement (12, 41) nicht berühren.

8. Saugrohr nach Anspruch 7, **dadurch gekennzeichnet, daß** die Dichtmittel (17, 21) mit den Nuten (19) im Schaltelement (12) im Eingriff stehen, wodurch eine Labyrinthdichtung gebildet ist.

9. Saugrohr nach einem der Ansprüche 1 bis 6, **dadurch gekennzeichnet, daß** die Dichtmittel (17, 28) Dichtwulste (33) aufweisen, die mit dem Schaltelement (12, 41) in Berührung stehen.

## Claims

1. Intake manifold, having at least one inlet (10), an outlet (25) on the cylinder side and a switching element (12, 41), which forms a switching roller, the latter more especially serving to influence the length of different tubular portions of the intake manifold,
- circular-ring-shaped gaps with respect to the walls of the intake manifold being formed by the switching roller,
- the switching roller being displaceable in the intake manifold,
- at least one sealing ring (17) being disposed in the gaps between the walls and the switching roller and being partially situated in grooves (19) adjacent the gaps,
**characterised in that** the sealing ring (17) has elastically deformable parts to produce contact pressure and is non-displaceably supported in the intake manifold, the elastically deformable parts comprising a resilient layer (34) which abuts against the walls of the intake manifold, and the contact pressure being used either to secure the sealing means in the intake manifold or to achieve a sealing effect between the switching element and the sealing means.

2. Intake manifold according to claim 1, **characterised in that** the at least one sealing ring (17) has a cutout and a greater diameter in the non-deformed state than in the deformed state when installed in the intake manifold.

3. Intake manifold according to claim 2, **characterised in that** a tubular spring is mounted in the inner face of the at least one sealing ring (17).

4. Intake manifold, having at least one inlet (10), an outlet (25) on the cylinder side and a switching element (12, 41), which forms a switching roller, the latter more especially serving to influence the length of different tubular portions of the intake manifold,
- circular-ring-shaped gaps with respect to the walls of the intake manifold being formed by the switching roller,
- the switching roller being displaceable in the intake manifold,
- at least one sealing ring (17) being disposed in the gaps between the walls and the switching roller and being partially situated in grooves (19) adjacent the gaps,
**characterised in that** the sealing ring (17) has elastically deformable parts to produce contact pressure and is non-displaceably supported in the intake manifold, the sealing ring comprising two discs (39), a resilient connection (40) being mounted between the outer edges of said discs as elastically deformable parts, the discs (39) having a shorter axial spacing from each other in the installed state than in the uninstalled state, so that the resilient connection in the installed state is deformed radially outwardly and pressed against the walls of the intake manifold.

5. Intake manifold according to claim 4, **characterised in that** the resilient connection (4) comprises a hose.

6. Intake manifold according to one of claims 4 or 5, **characterised in that** the discs (39) have a snap-fitting connection, and said discs are snapped in position when the sealing ring (17) is in its installed state.

7. Intake manifold according to one of the previous claims, **characterised in that** the sealing means (17,28) do not touch the switching element (12, 41 ).

8. Intake manifold according to claim 7, **characterised in that** the sealing means (17, 28) engage with the grooves (19) in the switching element (12), whereby a labyrinth seal is formed.

9. Intake manifold according to one of claims 1 to 6, **characterised in that** the sealing means (17, 28) have sealing beads (33) which are in contact with the switching element (12, 41).

## Revendications

1. Collecteur d'admission comportant au moins une entrée (10), une sortie (25) côté cylindre et un élément de commutation (12, 41) qui forme un cylindre de commutation, ce dernier en particulier pour agir sur la longueur de différents segments de tube du collecteur d'admission,
- le cylindre de commutation formant des intervalles en anneau de cercle vers les parois du collecteur d'admission,
- le cylindre de commutation étant mobile dans le collecteur d'admission,
- au moins une bague d'étanchéité (17) qui se trouve en partie dans des rainures (19) voisines de l'intervalle étant placée dans les intervalles entre les parois et le cylindre de commutation,
**caractérisé en ce que**
pour produire une pression de sollicitation la bague d'étanchéité (17) présente des parties déformables élastiquement et s'appuie de façon stationnaire dans le collecteur d'admission, les parties déformables élastiquement étant constituées d'une couche (34) élastique qui est en contact avec les parois du collecteur d'admission et la pression de sollicitation étant utilisée soit pour fixer le moyen d'étanchéité dans le collecteur d'admission soit pour obtenir un effet d'étanchéité entre l'élément de commutation et le moyen d'étanchéité.

2. Collecteur d'admission selon la revendication 1,
**caractérisé en ce que**
la bague d'étanchéité (17) présente un orifice et un diamètre plus grand à l'état non déformé qu'à l'état déformé et monté dans le collecteur d'admission.

3. Collecteur d'admission selon la revendication 2,
**caractérisé en ce qu'**
un ressort en tuyau est appliqué dans la surface interne de la bague d'étanchéité (17).

4. Collecteur d'admission comportant au moins une entrée (10), une sortie (25) côté cylindre et un élément de commutation (12, 41) qui forme un cylindre de commutation, ce dernier en particulier pour agir sur la longueur de différents segments de tube du collecteur d'admission,
- le cylindre de commutation formant des intervalles en anneau de cercle vers les parois du collecteur d'admission,
- le cylindre de commutation étant mobile dans le collecteur d'admission,
- au moins une bague d'étanchéité (17) qui se trouve en partie dans des rainures (19) voisines de l'intervalle étant placée dans les intervalles entre les parois et le cylindre de commutation,
**caractérisé en ce que**
pour produire une pression de sollicitation la bague d'étanchéité (17) présente des parties déformables élastiquement et s'appuie de façon stationnaire dans le collecteur d'admission, la bague d'étanchéité se composant de deux plaques (39) entre les bords extérieurs desquels est appliquée une liaison (40) élastique sous forme de parties déformables élastiquement, les plaques (39) à l'état monté ayant l'une par rapport à l'autre un écart axial plus faible qu'à l'état non monté, de sorte qu'à l'état monté la liaison élastique est déformée radialement vers l'extérieur et qu'elle est pressée contre les parois du collecteur d'admission.

5. Collecteur d'admission selon la revendication 4,
**caractérisé en ce que**
la liaison (40) élastique se compose d'un tuyau flexible.

6. Collecteur d'admission selon l'une des revendications 4 ou 5,
**caractérisé en ce que**
les plaques (39) présentent un assemblage à encliquetage et sont encliquetées lorsque la bague d'étanchéité (17) est à l'état monté.

7. Collecteur d'admission selon l'une des revendications précédentes,
**caractérisé en ce que**
les moyens d'étanchéité (17, 28) ne touchent pas l'élément de commutation (12, 41).

8. Collecteur d'admission selon la revendication 7,
**caractérisé en ce que**
les moyens d'étanchéité (17, 21) sont en prise avec les rainures (19) dans l'élément de commutation (12), ce dont il résulte une garniture en labyrinthe.

9. Collecteur d'admission selon l'une des revendications 1 à 6,
**caractérisé en ce que**
les moyens d'étanchéité (17, 28) présentent des bossages d'étanchéité (33) qui sont en contact avec l'élément de commutation (12, 41).
